# EUROPÄISCHE PATENTSCHRIFT

(11) **EP 2 408 595 B1**
(45) Veröffentlichungstag und Bekanntmachung des Hinweises auf die Patenterteilung: **31.08.2016**
(21) Anmeldenummer: 10718041.6
(22) Anmeldetag: 19.03.2010
(51) Int. Cl.: B25B 11/00, B23Q 3/08

(54) **VORRICHTUNG ZUR FIXIERUNG VON WERKSTÜCKEN AN EINEM WERKSTÜCKTRÄGER UND VERFAHREN ZUR BEARBEITUNG VON WERKSTÜCKEN**
DEVICE FOR FIXING WORKPIECES ON A WORKPIECE CARRIER AND METHOD FOR MACHINING WORKPIECES
DISPOSITIF POUR FIXER DES PIÈCES À UN PORTE-PIÈCE ET PROCÉDÉ D'USINAGE DE PIÈCES

(30) Priorität: 20.03.2009 DE 102009013726
(43) Veröffentlichungstag der Anmeldung: 25.01.2012
(73) Patentinhaber: MTU Aero Engines AG, 80995 München (DE)
(72) Erfinder: FESSLER-KNOBEL, Martin, 81543 München (DE); HUTTNER, Roland, 82287 Jesenwang (DE); AXTNER, Robert, 85253 Erdweg (DE)
(74) Vertreter: Hofstetter, Schurack & Partner
(86) Internationale Anmeldenummer: PCT/DE2010/000308
(87) Internationale Veröffentlichungsnummer: WO 2010/105612

(56) Entgegenhaltungen:
- DE-A1-102007 011 729
- JP-A- 53 068 480
- JP-A- 2008 229 774
- US-A1- 2002 049 028
- US-A1- 2005 109 249
- US-A1- 2007 221 328

## Beschreibung

Die vorliegende Erfindung betrifft eine Vorrichtung zur Fixierung von mindestens einem Werkstück an mindestens einem Werkstückträger gemäß dem einleitenden Teil des unabhängigen Anspruchs 1. Eine solche Vorrichtung ist aus der JP 53-68480 bekannt. Die Druckschriften JP 2008/229774 und DE 10 2007 011 729 A1 zeigen ebenfalls Vorrichtungen zur Fixierung von mindestens einem Werkstück. Die Erfindung betrifft weiterhin ein Verfahren zur Bearbeitung von Werkstücken.

Vorrichtungen zur Fixierung von Werkstücken an einem Werkstückträger sind bekannt. So beschreibt die DE 39 35 125 A1 eine flexible mechanische Haltevorrichtung zum Positionieren und Fixieren von Werkstücken. Die Haltevorrichtung umfasst dabei Halteelemente, die ortsfest positionierbar und befestigbar sind, insbesondere sind diese Halteelemente an Halteschienen lösbar anbringbar und positionierbar. Das zu bearbeitende Werkstück wird durch die Halteelemente in Zusammenwirken mit den Halteschienen und/oder einem Trägerrahmen oder auch durch die Halteschienen alleine oder in Zusammenwirken mit dem Trägerrahmen gehalten. Des Weiteren ist bekannt so genannte Anstellelemente unmittelbar mit dem Werkstück zu verkleben. Die Anstellelemente sind gegenüber einem Werkstückträger in einer Führung verschiebbar angeordnet. Sie können über eine Schraube in der geeigneten Position am Werkstückträger fixiert werden.

Nachteilig an den bekannten Vorrichtungen ist jedoch, dass die beschriebenen Führungen konstruktiv aufwändig sind und zudem ein hohes Gewicht aufweisen. Zudem ist das Anbringen wie auch das Lösen der Anstellelemente in der Führung des Werkstückträgers zeitaufwändig und erfordert einen hohen manuellen Aufwand.

Es ist daher Aufgabe der vorliegenden Erfindung eine Vorrichtung zur Fixierung von mindestens einem Werkstück an mindestens einem Werkstückträger der eingangs genannten Art bereitzustellen, die eine schnelle und einfache Fixierung des Werkstückes an dem Werkstückträger sowie eine ebenso einfache und schnelle Trennung dieser Elemente voneinander gewährleistet.

Es ist weiterhin Aufgabe der vorliegenden Erfindung ein Verfahren zur Bearbeitung von Werkstücken bereitzustellen, bei dem eine schnelle und einfache Fixierung des Werkstückes an dem Werkstückträger sowie eine ebenso einfache und schnelle Trennung dieser Elemente voneinander gewährleistet ist.

Gelöst werden diese Aufgaben durch eine Vorrichtung gemäß den Merkmalen des Anspruchs 1 sowie einem Verfahren gemäß den Merkmalen des Anspruchs 8.

Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt - soweit zweckmäßig - anzusehen sind.

Eine erfindungsgemäße Vorrichtung zur Fixierung von mindestens einem Werkstück an mindestens einem Werkstückträger weist mindestens ein als Formkörper ausgebildetes Anstell- und Fixierelement zur lösbaren Anordnung zwischen dem Werkstück und dem Werkstückträger auf, wobei mindestens eine erste Formkörperfläche zur Aufnahme eines ersten Klebevolumens und zur Fixierung einer Haftfläche des Werkstücks mit dem Anstell- und Fixierelement und mindestens eine zweite Formkörperfläche des Anstell- und Fixierelements zur Aufnahme eines zweites Klebevolumens und zur Fixierung einer Auflage- und Haftfläche des Werkstückträgers mit dem Anstell- und Fixierelement ausgebildet ist. Die erfindungsgemäße Vorrichtung ermöglicht eine einfache Verbindung zwischen dem Werkstückträger und dem Werkstück mithilfe des Anstell- und Fixierelements. Die Verbindung kann ohne einen komplizierten manuellen Aufwand für den Benutzer durchgeführt werden. Zudem kann das Anstell- und Fixierelement ohne Weiteres, zum Beispiel durch Torsion, nämlich durch ein Abdrehen und/oder ein Abbrechen des Anstell- und Fixierelements mittels eines Werkzeugs von dem Werkstück und dem Werkstückträger entfernt werden. Des Weiteren gewährleistet die erfindungsgemäße Vorrichtung eine höhere konstruktive Flexibilität, da das Werkstück und der Werkstückträger ohne Rücksicht auf mögliche Führungen am Werkstückträger zueinander positioniert werden können und vermeidet zudem ein bei bekannten Werkstückträgern mit Führungen immer wieder auftretendes Verkleben dieser Führungen. Zudem ist es möglicht, dass bei unterschiedlich geformten oder geneigten Haftflächen des Werkstücks im Bereich der jeweiligen Klebeorte die Anstell- und Fixierelemente über eine entsprechende Neigung oder Ausformung der ersten Formkörperfläche oder auch über eine entsprechende Ausformung oder Neigung der Auflage- und Haftfläche des Werkstückträgers zur relevanten Werkstückoberfläche positioniert werden.

In weiteren vorteilhaften Ausgestaltungen der erfindungsgemäßen Vorrichtung ist das Anstell- und Fixierelement polyederförmig, insbesondere quader-, würfel-, pyramiden- oder prismenförmig ausgebildet. Zudem ist die erste Formkörperfläche an die zweite Formkörperfläche angrenzend ausgebildet. Eine derartige Ausgestaltung ermöglicht den vielfältigen Einsatz der erfindungsgemäßen Vorrichtung. Dabei können alle Anstell- und Fixierelement, die zu einem bestimmten Werkstückträger zugehörig sind, gleich ausgebildet sein.

Die Vorrichtung umfasst erste und zweite Abstandselemente zur Ausbildung eines Spalts zwischen der ersten Formkörperfläche und dem Werkstück und zwischen der zweiten Formkörperfläche und dem Werkstückträger. Dadurch können vorteilhafterweise auch Klebstoffe eingesetzt werden, die einen Minimalspalt zwischen den Substraten erfordern.

In einer weiteren vorteilhaften Ausgestaltung der erfindungsgemäßen Vorrichtung ist das Anstell- und Fixierelement transparent oder transluzent ausgebildet. Vorteilhafterweise können dadurch auch Klebstoffe verwendet werden, die durch Licht aushärten.

Das Anstell- und Fixierelement umfasst mindestens eine Positioniervorrichtung zur lagerichtigen Positionierung an dem Werkstückträger und dem Werkstück. Dabei umfasst die Positioniervorrichtung mindestens ein erstes magnetisches Element, wobei das erste magnetische Element zur Positionierung an mindestens einem zweiten magnetischen Element, welches im Bereich der Auflage- und Haftfläche des Werkstückträgers ausgebildet ist, magnetisch anhaftbar ist. Damit ist gewährleistet, dass das Anstell- und Fixierelement immer mit seiner zweiten Formkörperfläche an der Auflage- und Haftfläche des Werkstückträgers positioniert wird. Eine Falschpositionierung des Anstell- und Fixierelements, zum Beispiel mit seiner ersten Formkörperfläche an die Auflage- und Haftfläche des Werkstückträgers wird zuverlässig verhindert. Zudem kann bei einer entsprechenden Positionierung der beiden magnetischen Elemente zueinander auch eine Querkraft erzeugt werden, wobei diese dazu dienen kann, dass das Anstell- und Fixierelement zusätzlich an das Werkstück gedrückt wird. Auf diese Weise kann vorteilhafterweise ein Abrutschen des Anstell- und Fixierelements verhindert werden, insbesondere zu einem Zeitpunkt, zu dem die Klebeverbindung noch nicht ausgehärtet ist. Es ist aber auch möglich, dass das Anstell- und Fixierelement mindestens eine Haltevorrichtung zur Halterung des Werkstücks und/oder des Werkstückträgers aufweist. Die Haltevorrichtung kann dabei mechanisch und/oder als Vakuumeinheit ausgebildet sein. Mechanische Haltevorrichtungen können zum Beispiel klemmenartig ausgebildet sein.

In einer weiteren vorteilhaften Ausgestaltung der erfindungsgemäßen Vorrichtung weist das Anstell- und Fixierelement mindestens eine ungefähr senkrecht zur zweiten Formkörperhälfte verlaufende Öffnung zur Aufnahme eines Schraub- oder Hebelelements auf. Derartige Schraub- oder Hebelelemente erleichtern das Lösen des Anstell- oder Fixierelements von dem Werkstückträger. Für den Einsatz von Schraubelementen weist die Öffnung ein Innengewinde auf. Durch ein entsprechendes Einführen des Schraub- oder Hebelelements in die Öffnung und einer entsprechenden Kraft- oder Momenteinleitung löst sich die Klebeverbindung zwischen dem Anstell- und Fixierelement und dem Werkstückträger. Es ist aber auch denkbar, dass ein entsprechender Lösemechanismus auch zum Lösen des Anstell- und Fixierelements von dem Werkstück selbst verwendet wird. Des Weiteren ist der Formkörper des Anstell- und Fixierelements grundsätzlich so geformt, dass er mit einfachen mechanischen Hilfsmitteln, wie zum Beispiel einem Maulschlüssel, bewegt, insbesondere gedreht werden kann, so dass es zu einem Lösen der entsprechenden Klebeverbindungen kommt.

In einer weiteren vorteilhaften Ausgestaltung der erfindungsgemäßen Vorrichtung ist der im ersten Klebevolumen und/oder im zweiten Klebevolumen befindliche Klebestoff als Klebstoffraupe und/oder Klebstofffilm ausgebildet. Vorteilhafterweise erlaubt die Ausgestaltung des Anstell- und Fixierelements als Formkörper den Auftrag unterschiedlichster Klebstoffformen. Als Klebstoffe finden insbesondere polymerisierbare Kunststoffkleber Verwendung.

Das Werkstück kann ein Bauelement einer Gasturbine sein.

Ein erfindungsgemäßes Verfahren zur Bearbeitung von Werkstücken umfasst die Verfahrensschritte gemäß Anspruch 8. Bei dem erfindungsgemäßen Verfahren kann auf das übliche Verbinden von Anstell- und Fixierelementen in einer Führung des Werkstückträgers verzichtet werden. Damit ist einerseits eine schnelle und einfache Fixierung des Werkstücks an dem Werkstücksträger und andererseits eine ebenso einfache und schnelle Trennung dieser Elemente voneinander gewährleistet. Zur lösbaren Fixierung des Werkstücks an dem Werkstückträger müssen lediglich mindestens zwei Seiten des Anstell- und Fixierelements mit Klebstoff versehen werden. Anschließend können diese durch die ausführende Person an der gewünschten Position auf dem stück und dem Werkstückträger geklebt werden. Nach der Bearbeitung können die Anstell- und Fixierelemente ohne Weiteres, zum Beispiel mithilfe eines einfaches Werkzeugs wie einem Maulschlüssel oder einem Hebelinstrument, von dem Werkstück und dem Werkstückträger, insbesondere durch Torsion, wie zum Beispiel Abdrehen und Abbrechen, entfernt werden.

In einer weiteren vorteilhaften Ausgestaltung des erfindungsgemäßen Verfahrens wird eine Vorrichtung verwendet, wie sie nach einem der Ansprüche 1-7 ausgebildet ist. Vor oder während der Fixierung des Werkstücks gemäß Verfahrensschritt b) ist eine lagerichtige Positionierung des Anstell- und Fixierelements an dem Werkstückträger und dem Werkstück mittels mindestens einer Positioniervorrichtung erfolgt. Dabei besteht die Positioniervorrichtung zum Beispiel aus zwei in Wirkverbindung stehenden Magnetelementen, wobei ein erstes magnetisches Element am Anstellund Fixierelement, insbesondere im Bereich der zweiten Formkörperfläche, und ein zweites magnetisches Element im Bereich der Auflage- und Haftfläche des Werkstückträgers angeordnet ist. Dadurch wird das Anstell- und Fixierelement mit der richtigen Seite, nämlich der zweiten Formkörperfläche an die entsprechende Seite des Werkstückträgers, nämlich an die Auflage- und Haftfläche positionsgenau gezogen. Bei einer entsprechenden Positionierung der beiden magnetischen Elemente zueinander kann darüber hinaus eine Querkraft erzeugt werden. Diese kann dazu dienen, dass das Anstell- und Fixierelement zusätzlich an das Werkstück gedrückt wird. Auf diese Weise kann ein Abrutschen verhindert werden, solange die Klebeverbindung nicht ausgehärtet ist.

In einer weiteren vorteilhaften Ausgestaltung des erfindungsgemäßen Verfahrens kann vor oder während der Fixierung des Werkstücks gemäß Verfahrensschritt b) eine Halterung des Anstell- und Fixierelements an dem Werkstück und/oder dem Werkstückträger mittels mindestens einer Haltevorrichtung erfolgen. Auch mithilfe dieser Haltevorrichtung wird ein Abrutschen oder Verrutschen des Anstell- und Fixierelements von dem Werkstückträger und/oder dem Werkstück zuverlässig verhindert, insbesondere zu einem Zeitpunkt, in dem die Klebeverbindungen noch nicht ausgehärtet sind.

Dabei kann das Anstell- und Fixierelement von dem Werkstückträger und dem Werkstück gemäß Verfahrensschritt d) mittels mechanischer Hilfsmittel gelöst werden. Dabei ist der Formkörper des Anstell- und Fixierelements derart ausgebildet, dass mit einfachen Werkzeugen, wie zum Beispiel einem Maulschlüssel oder einem hebelartigen Werkzeug, diese von dem Werkstückträger und dem Werkstück, insbesondere durch Torsion, wie zum Beispiel ein Abdrehen und Abbrechen, ohne Weiteres entfernt werden können.

Der Verfahrensschritt d) kann durch eine Reinigung erfolgen, insbesondere eine Reinigung mittels eines Strahlverfahrens des Anstell- und Fixierelements. Dabei können eine Vielzahl von Anstell- und Fixierelementen vor der Reinigung in mindestens einer Aufnahmevorrichtung angeordnet werden. Das erfindungsgemäße Verfahren erlaubt eine einfache Reinigung der Anstell- und Fixierelemente, da hier nur diese und nicht der komplette Werkstückträger gereinigt werden muss. Auch durch Klebstoff verklebte Führungen am Werkstückträger, die nur sehr schwer und zeitaufwändig zu reinigen sind, sind nicht vorhanden. Durch eine mögliche Anordnung einer Vielzahl von Anstell- und Fixierelementen in einer Aufnahmevorrichtung kann die Reinigung effektiv und schnell erfolgen. Dabei kann zum Beispiel ein Strahlmittel über eine Düse in einem geeigneten Winkel auf die entsprechenden Formkörperflächen der Anstell- und Fixierelemente aufgestrahlt werden, so dass die an diesen Flächen anhaftenden Klebstoffreste sicher entfernt werden.

Das erfindungsgemäße Verfahren kann an einem Werkstück eines Bauelements einer Gasturbine angewendet werden.

Weitere Vorteile, Merkmale und Einzelheiten der Erfindung ergeben sich aus der nachfolgenden Beschreibung mehrerer zeichnerisch dargestellter Ausführungsbeispiele. Dabei zeigen
- Figur 1: eine schematische Darstellung einer erfindungsgemäßem Vorrichtung gemäß einer ersten Ausführungsform;
- Figur 2: eine schematische Darstellung eines Lösevorgangs einer erfindungsgemäßen Vorrichtung gemäß einer zweiten Ausführungsform;
- Figur 3: eine schematische Darstellung einer erfindungsgemäßem Vorrichtung gemäß einer dritten Ausführungsform;
- Figur 4: eine schematische Darstellung einer erfindungsgemäßem Vorrichtung gemäß einer vierten Ausführungsform;
- Figur 5: eine schematische Darstellung einer erfindungsgemäßem Vorrichtung gemäß einer fünften Ausführungsform; und
- Figur 6: eine schematische Darstellung eines Reinigungsvorgangs einer erfindungsgemäßen Vorrichtung.

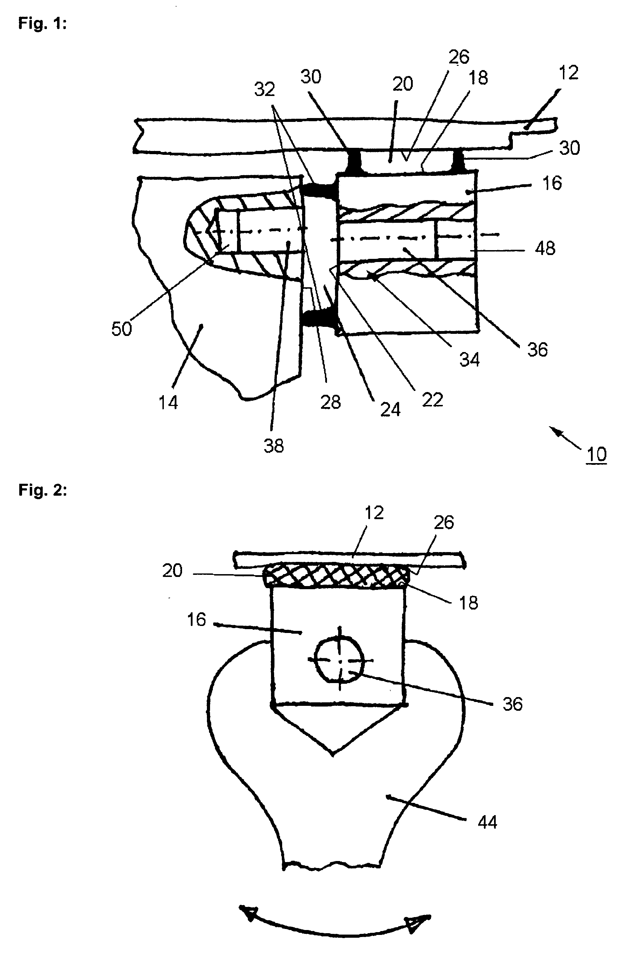

Figur 1 zeigt in einer schematischen Darstellung eine Vorrichtung 10 zur Fixierung von einem Werkstück 12 an einem Werkstückträger 14 gemäß einer ersten Ausführungsform. Man erkennt, dass die Vorrichtung 10 mindestens ein als quaderförmigen Formkörper ausgebildetes Anstell- und Fixierelement 16 zur lösbaren Anordnung zwischen dem Werkstück 12 und dem Werkstückträger 14 aufweist. Dabei ist eine erste Formkörperfläche 18 zur Aufnahme eines ersten Klebevolumens 20 und zur Fixierung einer Haftfläche 26 des Werkstücks 12 mit dem Anstell- und Fixierelement 16 ausgebildet. Des Weiteren erkennt man, dass eine zweite Formkörperfläche 22, die an die erste Formkörperfläche 18 angrenzend ausgebildet ist, zur Aufnahme eines zweiten Klebevolumens 24 und zur Fixierung einer Auflage- und Haftfläche 28 des Werkstückträgers 14 mit dem Anstell- und Fixierelement 16 vorhanden ist. Das Anstell- und Fixierelement 16 ist in dem dargestellten Ausführungsbeispiel quaderförmig ausgebildet. Aber auch andere Polyederformen, wie zum Beispiel Würfel, Pyramiden oder Prismen können die Form des Anstell- und Fixierelements 16 ausbilden.

In dem dargestellten Ausführungsbeispiel weist die Vorrichtung 10 zudem erste und zweite Abstandselemente 30, 32 zur Ausbildung jeweils eines Spalts zwischen der ersten Formkörperfläche 18 und dem Werkstück 12 einerseits und zwischen der zweiten Formkörperfläche 22 und dem Werkstückträger 14 andererseits auf. Das Anstell- und Fixierelement 16 weist zudem eine Positioniervorrichtung 34 zur lagerichtigen Positionierung an dem Werkstückträger 14 auf. Man erkennt, dass die Positioniervorrichtung 34 dabei ein erstes magnetisches Element 36 umfasst, wobei das erste magnetische Element 36 zur Positionierung an einem zweiten magnetischen Element 38, welches im Bereich der Auflage- und Haftfläche 28 des Werkstückträgers 14 ausgebildet ist, magnetisch anhaftbar ausgebildet ist. In dem dargestellten Ausführungsbeispiel ist das erste magnetische Element 36 in einer entsprechenden Bohrung 48 in dem Anstell- und Fixierelement 16 angeordnet. Die Längsachse der Bohrung 48 verläuft dabei ungefähr senkrecht zur zweiten Formkörperfläche 22. Das zweite magnetische Element 38 ist in einer Bohrung 50 in dem Werkstückträger 14 angeordnet. Die Längsachse der Bohrung 50 verläuft dabei ungefähr senkrecht zur Auflage- und Haftfläche 28 des Werkstückträgers 14.

Für die Bearbeitung des Werkstücks 12 wird zunächst der Werkstückträger 14 bereitgestellt. Anschließend erfolgt eine Fixierung des Werkstücks 12 an dem Werkstückträger 14 unter Verwendung der Vorrichtung 10 mit dem quaderförmigen Anstell- und Fixierelement 16. Dabei werden die erste und zweite Formkörperfläche 18, 22 des Anstell- und Fixierelements 16 jeweils mit Klebstoff versehen und anschließend einerseits mit dem Werkstück 12 und andererseits mit dem Werkstückträger 14 verklebt. In dem dargestellten Ausführungsbeispiel sind die beiden Klebevolumen 20, 24 als Klebstoffraupen ausgebildet. Es ist jedoch auch möglich, dass die Klebevolumen 20, 24 als Klebstofffilm an der ersten und zweiten Formkörperfläche 18, 22 angeordnet sind. Nach der Fixierung des Werkstücks 12 über eine geeignete Anzahl von Anstell- und Fixierelementen 16 an dem Werkstückträger 14 erfolgt die gewünschte Bearbeitung des Werkstücks 12. Nach der Bearbeitung erfolgt ein Lösen der Klebeverbindungen zwischen dem Anstell- und Fixierelement 16 und dem Werkstück 12 einerseits sowie dem Werkstückträger 14 andererseits.

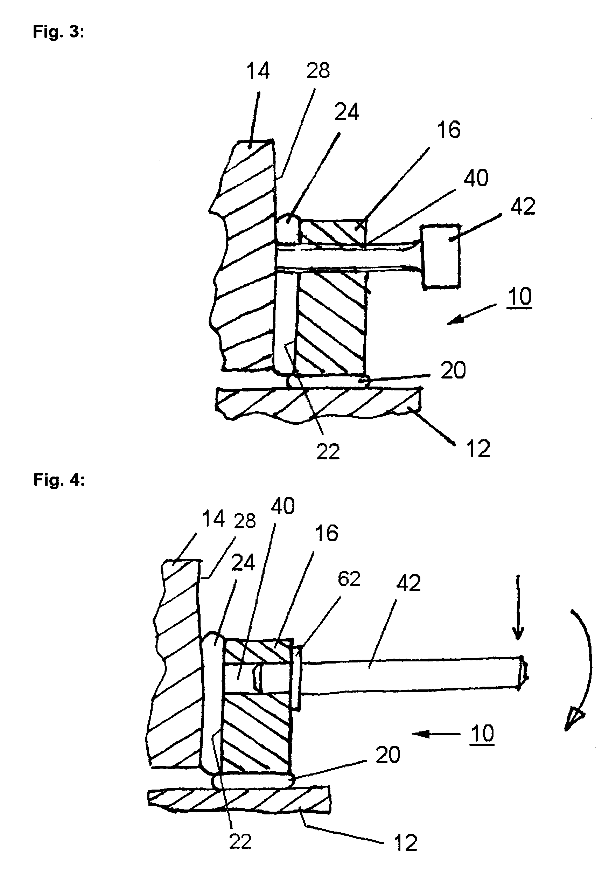

In den Figuren 2 bis 5 sind jeweils unterschiedliche Ausführungsformen der Vorrichtung 10 dargestellt. Des Weiteren sind unterschiedliche Löseformen und Lösevorgänge schematisch dargestellt. So zeigt Figur 2 einen Maulschlüssel 44, der ein quader- oder würfelförmiges Anstell- und Fixierelement 16 an zwei Seiten umgreift, wobei es sich hierbei um Formkörperflächen handelt, die nicht mit Klebstoff bestrichen sind. Durch eine Betätigung des Maulschlüssels 44, insbesondere durch ein Drehen des Maulschlüssels 44 (vergleiche Doppelpfeil), wird das Anstell- und Fixierelement 16 von dem Werkstück 12 beziehungsweise dessen Haftfläche 26 wie auch von dem Werkstückträger 14 (nicht dargestellt) durch Torsion gelöst. Die in Figur 3 schematisch dargestellte Vorrichtung 10 umfasst ein Anstell- und Fixierelement 16 mit einer ungefähr senkrecht zur zweiten Formkörperfläche 22 verlaufenden Bohrung 40. Die Bohrung 40 weist dabei ein Innengewinde auf, in das ein schraubenartiges Element 42 eindrehbar ist. Die Länge des schraubenartigen Elements 42 ist dabei derart gewählt, dass das dem Schraubenkopf gegenüberliegende Ende des Elements 42 bei einem Drehen des Elements 42 an der Auflage- und Haftfläche 28 des Werkstückträgers 14 angreifen kann, so dass durch eine weitere Drehung des Elements 42 das Anstell- und Fixierelement 16 von dem Werkstückträger 14 einerseits und andererseits von dem Werkstück 12 durch eine kippartige Bewegung gelöst wird.

Figur 4 zeigt eine weitere Ausführungsform der Vorrichtung 10, wobei das Anstell- und Fixierelement 16 wiederum eine ungefähr senkrecht zur zweiten Formkörperfläche 22 verlaufende und durchgehende Bohrung 40 aufweist. In diesem Ausführungsbeispiel ist die Bohrung 40 ohne Gewinde versehen und dient zum Eingriff eines stangenartigen Hebelelements 42. Dabei weist das Element 42 in Einführrichtung einen Kragen 62 auf, der an einer Formkörperfläche des Anstell- und Fixierelements 16 anliegt. Durch ein Kippen oder Verschwenken (vergleiche Richtungspfeile) des Elements 42 wird das Anstell- und Fixierelement 16 einerseits vom Werkstückträger 14 und andererseits vom Werkstück 12 gelöst.

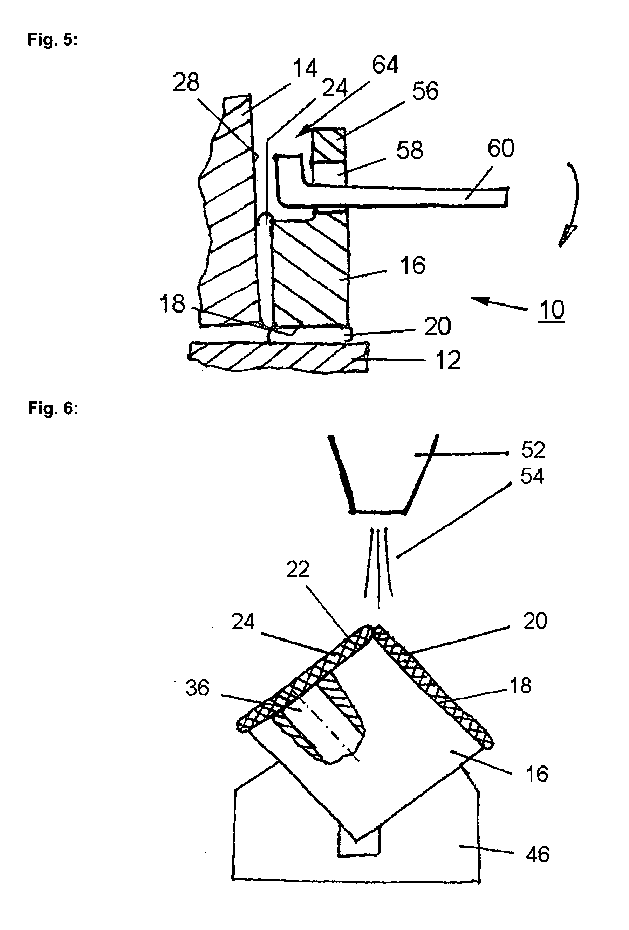

Figur 5 zeigt in einer schematischen Darstellung eine weitere Ausführungsform der Vorrichtung 10, umfassend das Anstell- und Fixierelement 16. In dem dargestellten Ausführungsbeispiel weist das Anstell- und Fixierelement 16 an einer der ersten Formkörperfläche 18 gegenüberliegenden Formkörperfläche einen Vorsprung 56 mit einer durchgehenden Bohrung 58 auf. Durch den Vorsprung 56 wird ein Zwischenraum 64 zwischen dem Vorsprung 56 und der Auflage- und Haftfläche 28 des Werkstückträgers 14 gebildet. Durch die Öffnung 58 kann in den Zwischenraum 64 ein hakenförmiges Hebelelement 60 eingeführt werden. Durch eine Betätigung des Hebelelements 60, zum Beispiel durch ein Kippen des Hebelelements 60 (vergleiche Bewegungspfeil in Figur 5) kann das Anstell- und Fixierelement 16 wiederum von dem Werkstückträger 14 und dem Werkstück 12 gelöst werden.

Figur 6 zeigt eine schematische Darstellung eines Reinigungsvorgangs der Vorrichtung 10 mit dem Anstell- und Fixierelement 16. Man erkennt, dass das Anstell- und Fixierelement 16 in einer Aufnahmevorrichtung 46 angeordnet ist. Die Anordnung erfolgt dabei derart, dass die erste und zweite Formkörperfläche 18, 22 mit den Klebevolumen 20, 24 in Richtung einer Düse 52 ausgerichtet sind. Über die Düse 52 wird ein Strahlmittel 54 in Richtung der Klebevolumen 20, 24 abgestrahlt, so dass diese von den Formkörperflächen 18, 22 rückstandsfrei entfernt werden können.

Das in den vorhergehenden Ausführungsbeispielen erwähnte Werkstück 12 kann ein Bauelement einer Gasturbine sein. Als Klebstoffe können zum Beispiel polymerisierbare Kunststoffkleber verwendet werden.

## Patentansprüche

1. Vorrichtung zur Fixierung von mindestens einem Werkstück (12) an mindestens einem Werkstückträger (14) mit mindestens einem als Formkörper ausgebildeten Anstell- und Fixierelement (16) zur lösbaren Anordnung zwischen dem Werkstück (12) und dem Werkstückträger (14), wobei
mindestens eine erste Formkörperfläche (18) zur Aufnahme eines ersten Klebevolumens (20) und zur Fixierung einer Haftfläche (26) des Werkstücks (12) mit dem Anstell- und Fixierelement (16) ausgebildet ist, wobei mindestens eine zweite Formkörperfläche (22) des Anstell- und Fixierelements (16) zur Aufnahme eines zweiten Klebevolumens (24) und zur Fixierung einer Auflage- und Haftfläche (28) des Werkstückträgers (14) mit dem Anstell- und Fixierelement (16) ausgebildet ist, wobei die erste Formkörperfläche (18) an die zweite Formkörperfläche (22) angrenzend ausgebildet ist,
**dadurch gekennzeichnet, dass**
- die Vorrichtung (10) erste und zweite Abstandselemente (30, 32) zur Ausbildung eines Spalts zwischen der ersten Formkörperfläche (18) und dem Werkstück (12) und zwischen der zweiten Formkörperfläche (22) und dem Werkstückträger (14) umfasst und
- das Anstell- und Fixierelement (16) mindestens eine Positioniervorrichtung (34) zur lagerichtigen Positionierung an dem Werkstückträger (14) und dem Werkstück (12) umfasst, wobei
- die Positioniervorrichtung (34) mindestens ein erstes magnetisches Element (36) umfasst, wobei das erste magnetische Element (36) zur Positionierung an mindestens einem zweiten magnetischen Element (38), welches im Bereich der Auflage- und Haftfläche (28) des Werkstückträgers (14) ausgebildet ist, magnetisch anhaftbar ist.

2. Vorrichtung nach Anspruch 1,
**dadurch gekennzeichnet, dass**
das Anstell- und Fixierelement (16) polyederförmig, insbesondere quader-, würfel-, pyramiden- oder prismenförmig ausgebildet ist.

3. Vorrichtung nach Anspruch 1 oder 2,
**dadurch gekennzeichnet, dass**
das Anstell- und Fixierelement (16) transparent oder transluzent ausgebildet ist.

4. Vorrichtung nach einem der vorhergehenden Ansprüche,
**dadurch gekennzeichnet, dass**
das Anstell- und Fixierelement (16) mindestens eine Haltevorrichtung zur Halterung des Werkstücks (12) und/oder des Werkstückträgers (14) aufweist.

5. Vorrichtung nach Anspruch 4,
**dadurch gekennzeichnet, dass**
die Haltevorrichtung mechanisch und/oder als Vakuumeinheit ausgebildet ist.

6. Vorrichtung nach einem der vorhergehenden Ansprüche,
**dadurch gekennzeichnet, dass**
das Anstell- und Fixierelement (16) mindestens eine im wesentlichen senkrecht zur
zweiten Formkörperfläche (22) verlaufene Öffnung (40) zur Aufnahme eines Schraub- oder Hebelelements (42) aufweist.

7. Vorrichtung nach einem der vorhergehenden Ansprüche,
**dadurch gekennzeichnet, dass**
der im ersten Klebevolumen (20) und/oder im zweiten Klebevolumen (24) befindliche Klebstoff als Klebstoffraupe und/oder Klebestofffilm ausgebildet ist.

8. Verfahren zur Bearbeitung von Werkstücken (12),
**dadurch gekennzeichnet, dass** das Verfahren folgende Schritte umfasst:
a) Bereitstellung von mindestens einem Werkstückträger (14);
b) Fixierung des mindestens einen Werkstücks (12) an dem Werkstückträger (14) unter Verwendung einer Vorrichtung (10) mit mindestens einem als Formkörper ausgebildeten Anstell- und Fixierelement (16) zur lösbaren Anordnung zwischen dem Werkstück (12) und dem Werkstückträger (14), wobei mindestens eine erste Formkörperfläche (18) des Anstell- und Fixierelements (16) mit einer Haftfläche (26) des Werkstücks (12) und mindestens eine zweite Formkörperfläche (22) des Anstell- und Fixierelements (16) mit einer Auflage- und Haftfläche (28) des Werkstückträgers (14) verklebt wird, wobei vor dem Verkleben ein Spalt zwischen der ersten Formkörperfläche (18) und dem Werkstück (12) und zwischen der zweiten Formkörperfläche (22) und dem Werkstückträger (14) durch erste und zweite Abstandselemente (30, 32) ausgebildet wird, wobei vor oder während der Fixierung des Werkstücks (12) eine lagerichtige Positionierung des Anstell- und Fixierelements (16) an dem Werkstückträger (14) und dem Werkstück (12) mittels mindestens einer Positioniervorrichtung (34) erfolgt, wobei zur lagerichtigen Positionierung die Positioniervorrichtung (34) mindestens ein erstes magnetisches Element (36) umfasst, wobei das erstes magnetisches Element (36) zur Positionierung an mindestens einem zweiten magnetischen Element (38), welches im Bereich der Auflage- und Haftfläche (28) des Werkstückträgers (14) ausgebildet ist, magnetisch angehaftet wird;
c) Bearbeiten des Werkstücks (12); und
d) Lösen der Klebeverbindungen zwischen dem Anstell- und Fixierelement (16) und dem Werkstück (12) sowie dem Werkstückträger (14) durch Abdrehen und/oder Abbrechen des Anstell- und Fixierelements (16) mittels eines Werkzeugs.

9. Verfahren nach Anspruch 8,
**dadurch gekennzeichnet, dass**
die Vorrichtung (10) nach einem der Ansprüche 1 bis 7 ausgebildet ist.

10. Verfahren nach Anspruch 8 oder 9,
**dadurch gekennzeichnet, dass**
vor oder während der Fixierung des Werkstücks (12) gemäß Verfahrensschritt b) eine Halterung des Anstell- und Fixierelements (16) an dem Werkstück (12) und/oder dem Werkstückträger (14) mittels mindestens einer Haltevorrichtung erfolgt.

## Claims

1. A device for fixing at least one workpiece (12) to at least one workpiece carrier (14) with at least one adjustment and fixing element (16) designed as a moulded article for detachable arrangement between the workpiece (12) and the workpiece carrier (14), wherein
at least one first moulded article surface (18) is designed for the mounting of a first adhesive volume (20) and for the fixing of an adhesive surface (26) of the workpiece (12) with the adjustment and fixing element (16), wherein at least a second moulded article surface (22) of the adjustment and fixing element (16) is designed for the mounting of a second adhesive volume (24) and for the fixing of a supporting and adhesive surface (28) of the workpiece carrier (14) with the adjustment and fixing element (16), wherein the first moulded article surface (18) is designed adjacent to the second moulded article surface (22),
**characterised in that**
- the device (10) includes first and second spacer elements (30, 32) for the formation of a gap between the first moulded article surface (18) and the workpiece (12) and between the second moulded article surface (22) and the workpiece carrier (14), and
- the adjustment and fixing element (16) includes at least one positioning fixture (34) for positioning in the correct position on the workpiece carrier (14) and the workpiece (12), wherein
- the positioning fixture (34) includes at least one first magnetic element (36), wherein the first magnetic element (36) can be adhered magnetically for positioning on at least one second magnetic element (38) which is designed in the area of the supporting and adhesive surface (28) of the workpiece carrier (14).

2. The device according to claim 1,
**characterised in that**
the adjustment and fixing element (16) is designed with a polyhedral shape, in particular a rectangular, cuboid, pyramidal or prism-shaped design.

3. The device according to claim 1 or 2,
**characterised in that**
the adjustment and fixing element (16) has a transparent or translucent design.

4. The device according to any of the preceding claims,
**characterised in that**
the adjustment and fixing element (16) has at least one holding device for holding the workpiece (12) and/or the workpiece carrier (14).

5. The device according to claim 4,
**characterised in that**
the holding device is designed to be mechanical and/or as a vacuum unit.

6. The device according to any of the preceding claims,
**characterised in that**
the adjustment and fixing element (16) has at least one opening (40) which runs essentially vertical to the second moulded article surface (22) for the mounting of a screw or lever element (42).

7. The device according to any of the preceding claims,
**characterised in that**
the adhesive located in the first adhesive volume (20) and/or in the second adhesive volume (24) is designed as an adhesive strip and/or adhesive film.

8. A method for machining workpieces (12),
**characterised in that** the method comprises the following steps:
a) Provision of at least one workpiece carrier (14);
b) Fixing of at least one workpiece (12) to the workpiece carrier (14) using a device (10) with at least one adjustment and fixing element (16) designed as a moulded article for detachable arrangement between the workpiece (12) and the workpiece carrier (14), wherein at least one first moulded article surface (18) of the adjustment and fixing element (16) is adhered to an adhesive surface (26) on the workpiece (12) and at least one second moulded article surface (22) of the adjustment and fixing element (16) is adhered to a supporting and adhesive surface (28) of the workpiece carrier, wherein a gap between the first moulded article surface (18) and the workpiece (12) and between the second moulded article surface (22) and the workpiece carrier (14) is formed by first and second spacer elements (30, 32) before adhesion, wherein positioning of the adjustment and fixing element (16) on the workpiece carrier (14) and the workpiece (12) occurs before or during the fixing of the workpiece (12) by means of at least one positioning fixture (34), wherein the positioning fixture includes at least one first magnetic element (36) for positioning in the proper position, wherein the first magnetic element (36) can be adhered magnetically for positioning on at least one second magnetic element (38) which is designed in the area of the supporting and adhesive surface (28) of the workpiece carrier (14);
c) Machining of the workpiece (12); and
d) Severance of the adhesive connection between the adjustment and fixing element (16) and the workpiece (12) as well as the workpiece carrier (14) through turning and/or snapping off of the adjustment and fixing element (16) using a tool.

9. The method according to claim 8,
**characterised in that**
the device (10) is designed according to any of claims 1 to 7.

10. The method according to claim 8 or 9,
**characterised in that**
the adjustment and fixing element (16) is mounted onto the workpiece (12) and/or the workpiece carrier (14) before or during the fixing of the workpiece (12) according to process step b) by means of at least one holding device.

## Revendications

1. Dispositif de fixation d'au moins une pièce (12) à au moins un porte-pièce (14) au moyen d'au moins un élément de serrage et de fixation (16), conformé en corps moulé, qui est destiné à être disposé de façon amovible entre la pièce (12) et le porte-pièce (14),
au moins une première surface de corps moulé (18) étant conformée pour recevoir un premier volume d'adhésif (20) et fixer une surface d'adhérence (26) de pièce (12) à l'élément de serrage et de fixation (16), au moins une seconde surface de corps moulé (22) de l'élément de serrage et de fixation (16) étant conformé pour recevoir un second volume d'adhésif (24) et fixer une surface d'appui et d'adhérence (28) du porte-pièce (14) à l'élément de serrage et de fixation (16), la première surface de corps moulé (18) étant conformée de manière adjacente à la seconde surface du corps moulé (22), **caractérisé en ce que**
- le dispositif (10) comporte des premiers et seconds éléments d'espacement (30, 32) destinés à ménager un espace entre la première surface de corps moulé (18) et la pièce (12) et entre la seconde surface de corps moulé (22) et le porte-pièce (14), et **en ce que**
- l'élément de serrage et de fixation (16) comprend au moins un dispositif de positionnement (34) destiné au positionnement correct sur le porte-pièce (14) et la pièce (12),
- le dispositif de positionnement (34) comprenant au moins un premier élément magnétique (36), le premier élément magnétique (36) pouvant adhérer magnétiquement, pour effectuer le positionnement, à au moins un second élément magnétique (38) qui est conformé dans la région de la surface d'appui et d'adhérence (28) du porte-pièce (14).

2. Dispositif selon la revendication 1, **caractérisé en ce que** l'élément de serrage et de fixation (16) a une forme de polyèdre, en particulier de parallélépipède, de cube, de pyramide ou de prisme.

3. Dispositif selon la revendication 1 ou 2, **caractérisé en ce que** ledit élément de serrage et de fixation (16) est conformé pour être transparent ou translucide.

4. Dispositif selon l'une des revendications précédentes, **caractérisé en ce que** ledit élément de serrage et de fixation (16) comporte au moins un dispositif de retenue destiné à maintenir la pièce (12) et/ou le porte-pièce (14).

5. Dispositif selon la revendication 4, **caractérisé en ce que** le dispositif de retenue a une conformation mécanique et/ou est conformé en une unité à dépression.

6. Dispositif selon l'une des revendications précédentes, **caractérisé en ce que** l'élément de serrage et de fixation (16) comporte au moins un orifice (40) qui s'étend sensiblement perpendiculairement à la seconde surface de corps moulé (22) et qui est destiné à recevoir une l'élément à levier ou de vissage (42).

7. Dispositif selon l'une des revendications précédentes, **caractérisé en ce que** l'adhésif, qui se trouve dans le premier volume d'adhésif (20) et/ou dans le second volume d'adhésif (24), est conformé comme un cordon d'adhésif et/ou en film d'adhésif.

8. Procédé d'usinage de pièces (12), **caractérisé en ce que** le procédé comprend les étapes suivante consistant à :
a) produire au moins un porte-pièce (14) ;
b) fixer l'au moins une pièce (12) au porte-pièce (14) à l'aide d'un dispositif (10) comportant au moins un élément de serrage et de fixation (16) conformé en corps moulé et destiné à être disposé de façon amovible entre la pièce (12) et le porte-pièce (14), au moins une première surface de corps moulé (18) de l'élément de serrage et de fixation (16) étant collée à une surface adhésive (26) de la pièce (12) et au moins une seconde surface de corps moulé (22) de l'élément de serrage et de fixation (16) étant collée à une surface d'appui et d'adhérence (28) du porte-pièce (14), un espace étant ménagé avant le collage entre la première surface de corps moulé (18) et la pièce (12) et entre la seconde surface de corps moulé (22) et le porte-pièce (14) par le biais de premier et second éléments d'écartement (30, 32), un positionnement correct de l'élément de serrage et de fixation (16) étant effectué avant ou pendant la fixation de la pièce (12) au niveau du porte-pièce (14) et de la pièce (12) par le bais d'au moins un dispositif de positionnement (34), le dispositif de positionnement (34) comportant au moins un premier élément magnétique (36) pour effectuer un positionnement correct, le premier élément magnétique (36) adhérant magnétiquement, pour le positionnement, à au moins un deuxième élément magnétique (38) qui est conformé dans la région de la surface d'appui et d'adhérence (28) du porte-pièce (14) ;
c) usiner la pièce (12) ; et
d) éliminer les liaisons adhésives entre l'élément de serrage et de fixation (16) et la pièce (12) ainsi que le porte-pièce (14) par torsion et/ou rupture de l'élément de serrage et de fixation (16) au moyen d'un outil.

9. Procédé selon la revendication 8, **caractérisé en ce que** le dispositif (10) est conformé selon l'une des revendications 1 à 7.

10. Procédé selon la revendication 8 ou 9, **caractérisé en ce que** la fixation de l'élément de serrage et de fixation (16) à la pièce (12) et/ou au porte-pièce (14) est effectuée au moyen d'au moins un dispositif de retenue avant ou pendant la fixation de la pièce (12) selon l'étape de procédé b).
